# EUROPEAN PATENT APPLICATION

(11) **EP 4 629 340 A1**
(43) Date of publication of application: **08.10.2025**
(21) Application number: 25162822.8
(22) Date of filing: 11.03.2025
(51) Int. Cl.: H01M 4/58, H01M 10/54, C22B 7/00, C01D 15/08, C22B 1/08, C22B 3/02, C22B 3/04, C22B 3/44, C22B 26/12

(54) **METHODS AND DEVICES FOR RECYCLING POLYANION LITHIUM ION BATTERY CATHODE MATERIAL**

(30) Priority: 02.04.2024 KR 20240044960
(71) Applicant: Korea Atomic Energy Research Institute, Daejeon 34057 (KR)
(72) Inventor: KIM, Sung Wook, Daejeon 35353 (KR); JEON, Min Ku, Sejong-si 30128 (KR); KIM, Hyungsub, Sejong-si 30141 (KR); KIM, Kyoung-Sun, Chungcheongbuk-do 27425 (KR)
(74) Representative: Maiwald GmbH

(57) **Abstract**

The present disclosure relates to a method and device for recycling a polyanion-based lithium cathode material for a lithium secondary battery, and more particularly, to a method and device for recycling a polyanion-based lithium cathode material capable of simply and efficiently separating high-value substances of a secondary battery cathode material without generating toxic byproducts such as acid waste.

## Description

### CROSS-REFERENCE TO RELATED APPLICATION

This application claims priority to and the benefit of Korean Patent Application No. 10-2024-0044960, filed on April 2, 2024, the disclosures of which is incorporated herein by reference in its entirety.

### TECHNICAL FIELD

The present disclosure relates to a method and device for recycling a polyanion-based lithium secondary battery cathode material for a lithium secondary battery, and more particularly, to a method and device for recycling a polyanion-based lithium secondary battery cathode material capable of simply and efficiently separating high-value materials of a secondary battery cathode material without generating toxic byproducts such as acid waste.

### RELATED ART

As technology development and demand for mobile devices and electric vehicles and hybrid vehicles increase, the demand for secondary batteries as an energy source is rapidly increasing, and among such secondary batteries, lithium secondary batteries with high energy density and operating potential, long cycle life, and low self-discharge rate are commercialized and widely used.

In addition, as interest in environmental issues has increased recently, many studies have been conducted on electric vehicles (EVs) and hybrid electric vehicles (HEVs) that can replace fossil fuel vehicles such as gasoline vehicles and diesel vehicles, which are one of the major causes of air pollution. As power sources of the electric vehicles (EVs) and hybrid electric vehicles (HEVs), nickel-metal hydrogen (Ni-MH) secondary batteries have been mainly used, and research using lithium secondary batteries with high energy density, high discharge voltage, and output stability is actively underway, and some are commercialized.

The lithium secondary batteries have a structure in which a non-aqueous electrolyte containing a lithium salt is impregnated into an electrode assembly in which a porous separator is interposed between a cathode and anode in which the respective active material is applied on a current collector.

As cathode active materials of lithium secondary batteries, lithium cobalt-based oxides, lithium manganese-based oxides, lithium nickel-based oxides, and lithium composite oxides are used, and as anode active materials, carbon materials are mainly used, and silicon compounds, and sulfur compounds are also considered.

There is a need for using a cathode material capable assisting output at low voltage range when manufacturing batteries for automobiles that requires high output characteristics, and recently, lithium iron phosphate secondary batteries using LiFePO₄, which is an active material of polyanion-based lithium cathode material, have been proposed.

Although the LFP (LiFePO₄) battery has a lower operating voltage range than the conventionally widely used cathode active materials, such ternary (Li(Ni,Mn,Co)O₂) materials and spinel-type manganese (LiMn₂O₄), it has advantages of stable operating characteristics, so its application area is gradually expanding in the current situation where safety issues are emerging.

As interest in lithium secondary batteries increases and their application areas expand, interest in recycling high-value materials contained in the batteries is also increasing. To date, the recycling process of lithium secondary batteries has been focused only on the recovery of lithium, nickel, and manganese cobalt contained in the ternary (Li(Ni,Mn,Co)O₂) materials and spinel-type manganese (LiMn₂O₄), and the recycling of LFP has not received much attention yet.

However, the post-consumption of LFP batteries in particular can mitigate the life cycle impact of electric vehicles by almost 50 %. The global warming potential associated with production per kilogram of LFP active material calculated using life cycle analysis is about 19 to 55 MJ. Therefore, recycling not only lithium-ion batteries rich in nickel, cobalt, and manganese, but also all lithium-ion batteries, will be a good opportunity to activate the local economy as long-term circular economy principles are applied.

Meanwhile, in the conventional recycling method of NCM-based cathode materials, when the method is applied to polyanion-based cathode materials, there is a problem in that it is impossible to apply or the recycling efficiency thereof is extremely reduced due to the difference in the crystal structure of the NCM-based cathode material and the polyanion-based cathode material.

Accordingly, a process for recycling LFP has been proposed (International Publication No. WO 2023/050014), but this is disadvantageous in terms of economic feasibility and usability due to excessive complexity in the recycling process, and also, in terms of environment by using toxic strongly acidic substances in the recycling process.

Therefore, there is an urgent need for research on a method for recycling polyanion-based lithium secondary battery cathode material that can be applied to the polyanion-based lithium cathode material containing LFP, but is advantageous in terms of safety and eco-friendly because it does not use toxic acidic substances in the process, and allows selective separation and recovery of the cathode material through a simple and efficient process.

### [PRIOR ART DOCUMENT]

[Patent document] (Patent document 1) International Publication No. WO 2023/050014

### SUMMARY

The present disclosure has been devised to solve the above problems, and it is an object of the present disclosure to provide a method and device for recycling a polyanion-based lithium secondary battery cathode material that safely separates lithium and polyanion-based compounds contained in the polyanion-based lithium secondary battery cathode material included in a waste battery, thereby ultimately reducing social and economic costs of the lithium secondary battery.

In addition, it is an object of the present disclosure to provide a method and device for recycling a polyanion-based lithium secondary battery cathode material that is excellent in terms of safety and eco-friendly because no toxic acidic chemicals are used during the corresponding recycling process, and also excellent in terms of the economic feasibility and usability because no additional purification process is required.

In order to solve the above problems, the present disclosure provides a method for recycling a polyanion-based lithium secondary battery cathode material, including: (1) forming a first mixture including a compound containing polyanions and lithium chloride (LiCl) by chlorinating a polyanion-based lithium secondary battery cathode material separated from a battery with a gas containing chlorine; and (2) separating and obtaining the compound containing polyanions and a second mixture including the lithium chloride and a solvent by contacting the first mixture with the solvent.

In addition, after the step (2), the method may further include obtaining the lithium chloride by removing the solvent from the second mixture.

In addition, the polyanion-based lithium secondary battery cathode material in the step (1) may be LiAₓ(PO₄)_{y}, wherein "A" is at least one selected from the group consisting of iron (Fe), cobalt (Co), manganese (Mn), and nickel (Ni), and "x" and "y" satisfy 0.5<x≤3 and 0.5<y≤3.

In addition, a temperature of the chlorination reaction may be 20 to 280 °C.

In addition, a temperature of the chlorination reaction may 170 to 280 °C.

In addition, the gas including chlorine may include at least one selected from the group consisting of chlorine gas (Cl₂), hydrogen chloride (HCl), phosgene (COCl₂), and carbon tetrachloride (CCl₄).

In addition, the solvent may include at least one selected from the group consisting of water, ethanol, methanol, butanol, propanol, hydrazine, methylformaldehyde, acetone, formic acid, pyridine, and benzene.

In addition, the present disclosure provides a method for recycling a polyanion-based lithium secondary battery cathode material, including: (1) forming a first mixture including a compound containing polyanions and lithium chloride (LiCl) by chlorinating a polyanion-based lithium secondary battery cathode material separated from a battery with a gas containing chlorine; and (2) separating and obtaining the compound containing polyanions and a second mixture including the lithium chloride and a solvent by contacting the first mixture with the solvent; (3) forming a third mixture including lithium carbonate (Li₂CO₃) by reacting the second mixture with a carbonate; and (4) separating the lithium carbonate from the third mixture.

In addition, the present disclosure provides a method for recycling a polyanion-based lithium secondary battery cathode material, including: (1) forming a first mixture including a compound containing polyanions and lithium chloride (LiCl) by chlorinating a polyanion-based lithium secondary battery cathode material separated from a battery with a gas containing chlorine; and (2) separating and obtaining the compound containing polyanions and a second mixture including the lithium chloride and a solvent by contacting the first mixture with the solvent; (3) forming a third mixture including lithium carbonate (Li₂CO₃) by reacting the second mixture with a carbonate; (4) separating the lithium carbonate from the third mixture; (5) obtaining a fourth mixture including lithium hydroxide (LiOH) and calcium carbonate (CaCO₃) by reacting the lithium carbonate with calcium hydroxide; and (6) separating the lithium hydroxide from the fourth mixture.

In addition, after the step (2) the method may further include: (7) forming a fifth mixture by adding a lithium compound to the compound containing polyanions; (8) reforming a phase of the polyanion-based lithium secondary battery cathode material by reacting the fifth mixture; and (9) resynthesizing the fifth mixture into the polyanion-based lithium secondary battery cathode material with excellent electrochemical activity by improving a crystallinity of the fifth mixture.

In addition, the lithium compound may be lithium carbonate separated from the third mixture in the step (4) or lithium hydroxide (LiOH) separated from the fourth mixture in the step (6).

In addition, the molar number of lithium ions in the lithium compound may be 100 to 120 % of the molar number of metal ions in the compound containing polyanions.

In addition, the step (8) may include reacting the fifth mixture at a temperature of 200 to 400 °C for 1 to 24 hours.

In addition, the step (9) may include reacting the fifth mixture at a temperature of 500 to 850 °C for 1 to 24 hours.

In addition, the resynthesized polyanion-based lithium secondary battery cathode material may have an initial discharge capacity of 100 mAh/g or more.

In addition, the present disclosure provides a device for recycling a polyanion-based lithium cathode material, including a first reactor configured to form a first mixture including a compound containing polyanions and lithium chloride by chlorinating a polyanion-based lithium cathode material separated from a battery with a gas containing chlorine, and a first separator configured to communicate with first reactor to separate and obtain the compound containing polyanions and a second mixture containing lithium chloride and a solvent by contacting the first mixture with the solvent.

In addition, the device for recycling a polyanion-based lithium secondary battery cathode material according to the present disclosure may further include a second reactor configured to communicate with the first separator and form a third mixture including lithium carbonate by reacting the second mixture with carbonate, and a second separator configured to communicate with the second reactor and separate the lithium carbonate from the third mixture.

In addition, the device for recycling a polyanion-based lithium secondary battery cathode material according to the present disclosure may further include a third reactor configured to communicate with the second separator and form a fourth mixture including lithium hydroxide (LiOH) and calcium carbonate (CaCO₃) by reacting the lithium carbonate with calcium hydroxide, and a third separator configured to communicate with the third reactor and separate the lithium carbonate from the fourth mixture.

In addition, the device for recycling a polyanion-based lithium secondary battery cathode material according to the present disclosure may further include a synthesizer configured to communicate with the first separator, the second separator, and the third separator, and resynthesizes a polyanion-based lithium secondary battery cathode material from a compound containing polyanions, lithium carbonate, and lithium hydroxide separated by the first separator, the second separator, and the third separator.

In addition, the device for recycling a polyanion-based lithium secondary battery cathode material according to the present disclosure may further include a gas injector for injecting gas into the first reactor.

Through the present disclosure, it is possible to provide a method and apparatus for recycling a polyanion-based lithium cathode material that safely separates lithium and polyanion-based compounds contained in polyanion-based lithium cathode materials included in waste batteries, thereby ultimately reducing social and economic costs of the lithium secondary batteries.

In addition, it is excellent in terms of safety and eco-friendly because no toxic acidic chemicals are used during the corresponding recycling process, and it is also excellent in terms of the economic feasibility and usability because no additional purification process is required.

### BRIEF DESCRIPTION OF THE DRAWINGS

FIG. 1 is a flowchart schematically illustrating a method for recycling a polyanion-based lithium secondary battery cathode material according to an embodiment of the present disclosure.
FIG. 2 is a flowchart schematically illustrating a method for recycling a polyanion-based lithium secondary battery cathode material according to another embodiment of the present disclosure.
FIG. 3 is a flowchart schematically illustrating a method for recycling a polyanion-based lithium secondary battery cathode material according to another embodiment of the present disclosure.
FIG. 4 is a flowchart schematically illustrating a method for recycling a polyanion-based lithium secondary battery cathode material according to another embodiment of the present disclosure.
FIG. 5 is a diagram illustrating a device for recycling a polyanion-based lithium secondary battery cathode material according to an embodiment of the present disclosure.
FIG. 6 is a diagram illustrating a device for recycling a polyanion-based lithium secondary battery cathode material according to another embodiment of the present disclosure.
FIG. 7 is a diagram illustrating a device for recycling a polyanion-based lithium secondary battery cathode material according to another embodiment of the present disclosure.
FIG. 8 is a diagram illustrating a device for recycling a polyanion-based lithium secondary battery cathode material according to another embodiment of the present disclosure.
FIG. 9 is a graph illustrating the results of X-ray diffraction experiment analysis for the entire product after chlorination of LFP according to an embodiment of the present disclosure.
FIG. 10 is a graph illustrating the results of X-ray diffraction experiment analysis for a solid state material remaining after separating the product through water after chlorination of LFP according to an embodiment of the present disclosure.
FIG. 11 is a photograph illustrating a recycling process of an electrode including a polyanion-based lithium secondary battery cathode material according to an embodiment of the present disclosure.
FIG. 12 is a graph illustrating the results of X-ray diffraction experiment analysis for a solid product obtained by separating an electrode including a polyanion-based lithium secondary battery cathode material through water after chlorination reaction according to an embodiment of the present disclosure.
FIG. 13 is a graph comparing an analysis result of an X-ray diffraction experiment on a resynthesis product of a polyanion-based lithium secondary battery cathode material according to an embodiment of the present disclosure with an experimental analysis result of a resynthesized cathode material product without the method of the present disclosure.
FIG. 14 is a graph comparing an analysis result of a discharge capacity of a resynthesis product of a polyanion-based lithium secondary battery cathode material according to an embodiment of the present disclosure with an analysis result of the resynthesized cathode material product without the method of the present disclosure.
FIG. 15 is a graph comparing an analysis result of an X-ray diffraction experiment on a resynthesis product of a polyanion-based lithium secondary battery cathode material according to another embodiment of the present disclosure with an experimental analysis result of a resynthesized cathode material product without the method of the present disclosure.

### DETAILED DESCRIPTION OF THE EMBODIMENTS

Hereinafter, embodiments of the present disclosure will be described in detail to be easily performed by a person with ordinary skills in the art to which the present disclosure belongs. The present disclosure can be implemented in various different forms and is not limited to the embodiments described herein.

As described above, the conventional method for recycling a secondary battery cathode material cannot be applied to a polyanion-based lithium cathode material such as LFP, or even if it can be applied to the polyanion-based lithium cathode material, there is a limitation in that toxic acidic substances are used in the process, which is disadvantageous in terms of safety and eco-friendly or requires an additional purification process, which is also disadvantageous in terms of economic feasibility and usability.

Therefore, the present disclosure has sought to solve the above-described problem by providing a method for recycling a polyanion-based lithium secondary battery cathode material, the method comprising: (1) forming a first mixture including a compound containing a polyanion and lithium chloride by chlorinating a polyanion-based lithium secondary battery cathode material with a gas containing chlorine; and (2) separating and obtaining a compound containing a polyanion and a second mixture containing lithium chloride and a solvent by contacting the first mixture with a solvent. Through this, lithium and polyanion-based compounds contained in the polyanion-based lithium cathode material included in the waste battery were safely separated, ultimately reducing the social and economic costs of the lithium secondary battery. In addition, since no toxic acidic chemicals are used in the corresponding recycling process, it is safe and eco-friendly compared to the conventional recycling method, and since no additional purification process is required, high-value materials may be separated simply and efficiently, thereby providing a method for recycling a polyanion-based lithium secondary battery cathode material which is very excellent in terms of economic.

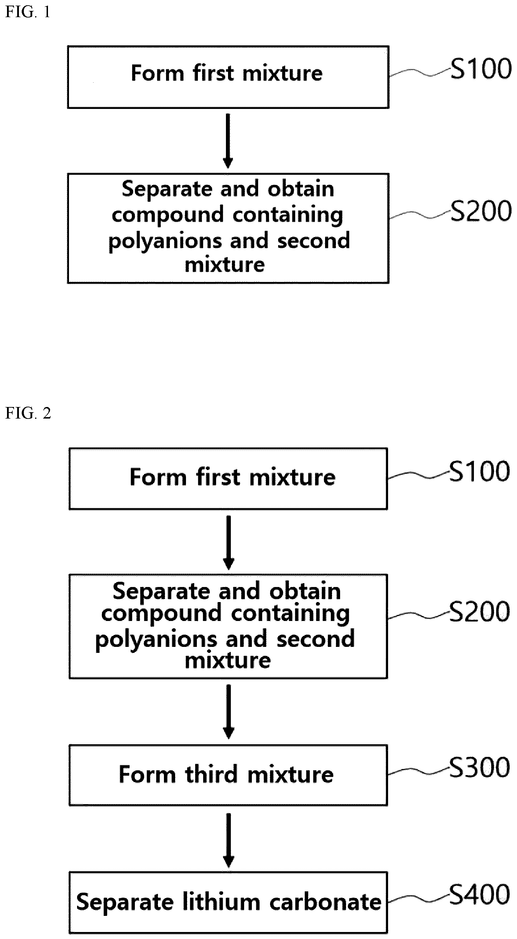

FIG. 1 is a flowchart schematically illustrating a method for recycling a polyanion-based lithium secondary battery cathode material according to an embodiment of the present disclosure, and hereinafter, with reference to the flowchart, the present disclosure will be specifically described.

First, in a step (1), a polyanion-based lithium secondary battery cathode material separated from a battery is chlorinated with a gas containing chlorine to form a first mixture including a compound containing a polyanion and lithium chloride (S100 in FIG. 1).

In the case of the conventional method for recycling NCM-based cathode material, when the method is applied to the polyanion-based lithium cathode material, there is a problem that the NCM-based cathode material and the polyanion-based cathode material may not be applied due to the difference in chemical properties and crystal structure, or the recycling efficiency thereof is extremely reduced.

Therefore, as described above for the polyanion-based lithium secondary battery cathode material, a recycling method of separating lithium, cathode metal material, and polyanion-based material by leaching the waste battery in a strong acid solution has been reported. However, in addition to the problem of additional generation of acid waste, the separation method using such strong acid has the problem that lithium is separated together with other metals during the separation process due to the reactivity of lithium, requiring an additional purification process to separate lithium, or the separation efficiency is significantly reduced due to the similar chemical properties of the metals.

Therefore, the present disclosure solved the above-mentioned problem by chlorinating the polyanion-based lithium secondary battery cathode material with a gas containing chlorine. More specifically, the waste battery may include a polyanion-based lithium compound, which is a secondary battery cathode material, and in the present disclosure, the compound may be separated into lithium and a compound containing polyanions through a chlorination reaction performed in the step (1). That is, lithium may be converted into lithium chloride and separated from a compound containing polyanions.

Through this, the present disclosure can simplify the entire process through selective and simple recovery of lithium chloride without generating secondary acid waste, thereby maximizing treatment efficiency and processing efficiency.

Specifically, the compound containing polyanions may be a compound remaining after lithium is removed from the compound of Chemical Formula 1 included in the polyanion-based lithium secondary battery cathode material to be described below. For example, when the compound of Chemical Formula 1 is LiFePO₄, the compound containing polyanions may be FePO₄.

In addition, the compound containing polyanions may be alone or may further include some impurities or solvents commonly contained.

Here, the polyanion-based compound may be recycled again in a way of resynthesizing the secondary battery cathode material through a process described below.

Specifically, the polyanion-based lithium secondary battery cathode material separated from the battery may include a compound of the following Chemical Formula 1.

[Chemical Formula 1] LiAₓ(B)_{y}

Here, "A" may be at least one selected from the group consisting of iron (Fe), cobalt (Co), manganese (Mn), nickel (Ni), vanadium (V), and titanium (Ti), and "B" may be at least one selected from the group consisting of PO₄, PO₄F, SO₄, SO₄F, BO₃, SiO₄, P₂O₇, MoO₄, and WO₄. Preferably, "A" may be at least one selected from the group consisting of iron (Fe), cobalt (Co), manganese (Mn), and "B" may be PO₄.

When "A" is at least one selected from the group consisting of iron (Fe), cobalt (Co), manganese (Mn), and "B" is PO₄, the polyanion-based lithium cathode material has an olivine-type structure. When the cathode material has such an olivine-type structure as described above, the chlorination reaction efficiency is superior in a low temperature region compared to cases having other structures such as a layered structure and a spinel-type structure, and as a result, the lithium and the compound containing polyanions may be separated from the cathode material with high efficiency in the low temperature region.

In addition, "x" and "y" of Chemical Formula 1 may satisfy 0.5<x≤3.0 and 0.5<y≤3.0.

In addition, the polyanion-based lithium cathode material may be at least one selected from the group consisting of a cathode material active material including the compound of Chemical Formula 1, a cathode material including the cathode material active material, and an electrode including the cathode material.

Specifically, the chlorination reaction in the step (1) may be carried out at 20 to 280 °C, more preferably, at 80 to 280 °C, and most preferably, at 170 to 280 °C, and the temperature of the chlorination reaction may be the temperature of the gas including chlorine. In this case, when the temperature of the chlorination reaction is less than 80 °C, the polyanion-based lithium cathode material may not react sufficiently with the gas containing chlorine, and a non-reactive polyanion-based lithium cathode material may remain. In addition, when the temperature of the chlorination reaction is less than 170 °C, there is a concern that the chlorination reaction efficiency of lithium contained in the polyanion-based lithium secondary battery cathode material may be reduced, and when the temperature of the chlorination reaction is more than 280 °C, lithium and compound containing polyanions may additionally react to form another compound including both lithium and polyanion-based compound, and the separation of the lithium and the polyanion-based compound may not be possible.

More specifically, referring to Table 1 described below, when the reaction temperature is 80 to 280 °C, the reaction rate of the polyanion-based lithium secondary battery cathode material is superior compared to when it is outside the corresponding temperature range. When the reaction is carried out at a temperature below 80 °C, the polyanion-based lithium secondary battery cathode material may not react completely and may remain, and when the reaction is carried out at a temperature exceeding 280 °C, the separation may not be properly performed due to the occurrence of side reactions. In addition, in particular, when the reaction is carried out at 170 to 280 °C, the separation efficiency may be very superior compared to when it is outside the corresponding temperature range.

However, even if the polyanion-based lithium secondary battery cathode material remains, there is no major problem in recovering lithium chloride through a subsequent dissolution process. This low-temperature process has the advantage of lowering energy consumption and extending the life of the reactor and auxiliary facilities, so that the low-temperature process may be applied at the expense of some efficiency loss when necessary. Therefore, LFP may be separated even when the chlorination reaction is carried out at a temperature range of 20 °C to 280 °C, and it is also excellent in that it is economical as it reduces energy consumption of the process and extends the life of auxiliary facilities.

On the other hand, when separating lithium through the chlorination reaction on the NCM-based cathode material with a layered crystal structure, the reaction is carried out only at a temperature of approximately 450 °C or higher due to the crystal structure. As a result, there is a problem in that a lot of energy is consumed in lithium separation, and it is very disadvantageous in terms of economic and environmental aspects. However, when applied to the polyanion-based lithium cathode material having no layered structure, lithium may be separated at a relatively low temperature due to the difference in the crystal structure, thereby exhibiting very excellent performance in terms of economic and environmental aspects.

In addition, the chlorination reaction according to the present disclosure may be carried out at the above-mentioned temperature condition for 0.1 to 24 hours, preferably 0.3 to 6 hours. In this case, when the chlorination reaction is carried out for 0.3 to 6 hours, the efficiency of the chlorination reaction may be superior compared to other cases.

Specifically, the gas containing chlorine is not limited as long as it may react with the polyanion-based lithium secondary battery cathode material to form the lithium chloride and the compound containing polyanions, but preferably, it may include at least one selected from the group consisting of chlorine gas (Cl₂), hydrogen chloride (HCl), phosgene (COCl₂), and carbon tetrachloride (CCl₄), and more preferably, it may include chlorine gas (Cl₂).

More specifically, the gas containing chlorine may be used by mixing a compound containing chlorine at 0.1 to 90 vol% with respect to the total weight and a gas such as Ar, N₂, or O₂ in the remaining amount. The remaining gas may act as a carrier gas. In this case, when the chlorine gas is mixed with less than 0.1 vol%, the efficiency of the chlorination reaction may be lowered, and the separation of cathode material including lithium may not be sufficiently performed, and also, when the chlorine gas is mixed with more than 90 vol%, there may be a problem in that the process facilities are damaged and the process efficiency is lowered due to the occurrence of excess non-reactive chlorine gas. Therefore, the mixing ratio of chlorine gas may be appropriately selected in consideration of the type and content of the cathode material in the waste battery.

In addition, the amount of the gas containing chlorine may be appropriately selected according to the amount of the polyanion-based lithium secondary battery cathode material added from the waste battery, and preferably, the amount of the gas containing chlorine may be mixed in a molar number of 1 to 50 times the molar number of lithium ions in the polyanion-based lithium secondary battery cathode material. If the gas containing chlorine is included in the molar number less than 1 times the molar number of lithium ions in the polyanion-based lithium secondary battery cathode material, the desired chlorination reaction may not be sufficiently carried out, resulting in a problem that the separation efficiency of the lithium and the compound containing polyanion may be lowered, and if the gas containing chlorine is included in the molar number greater than 50 times the molar number of lithium ions in the polyanion-based lithium secondary battery cathode material, there may be a problem of increased process costs due to excessive use of chlorine.

Next, in a step (2), the first mixture is contacted with a solvent to separate and obtain the compound containing polyanions and a second mixture containing lithium chloride and the solvent (S200 in FIG. 1).

In the conventional separation method using a strong acid, there is a problem that the separation efficiency is lowered due to the similar chemical properties of the cathode metal materials. That is, the separation and recycling efficiency was reduced because only the specific cathode metal material was not separated and the cathode metal material having similar properties was separated together and an additional metal separation purification process was required.

Therefore, the present disclosure solves the above-described problem through a simple process of contacting the first mixture with a solvent. More specifically, the lithium chloride produced in the step (1) through the above-described chlorination reaction has a very high solubility in a solvent described later, and thus is dissolved in the solvent through this step and converted into a liquid phase, and the polyanion-based compound that did not react with chlorine has almost no solubility in a solvent described later, and thus remains in a solid state, so it may be easily separated as it is washed through the solvent. That is, in the present disclosure, the cathode material metal material may be selectively separated through a simple process in which the compound containing polyanions is not dissolved in the solvent after the chlorination reaction, and is washed and separated through the solvent, so that no additional purification process is required.

Specifically, the solvent is not limited as long as it is capable of dissolving the lithium chloride while not dissolving the compound containing polyanions and thus being contacted with the first mixture to separate the first mixture into the compound containing polyanion and the second mixture, but preferably it may include at least one selected from the group consisting of water, ethanol, methanol, butanol, propanol, hydrazine, methylformaldehyde, acetone, formic acid, pyridine, and benzene, and more preferably water. When the solvent is water, the solubility in the lithium chloride is high to operate in a relatively small amount compared to the case of using other solvents, so it is economical, and other toxic chemical substances such as organic waste liquids are not generated, so it may be advantageous in terms of eco-friendly.

In addition, the second mixture may include some impurities that may normally be contained.

Meanwhile, the amount of the solvent injected in the step (2) may be appropriately selected in consideration of the amount of the first mixture transferred in the step (1), and preferably may be mixed in an amount of 1,000 to 100,000 parts by weight based on 100 parts by weight of the first mixture transferred in the step (1).

In this way, the method for recycling a secondary battery cathode material according to the present disclosure may easily separate lithium and polyanions included in the polyanion-based lithium cathode material through the step (2), implement an eco-friendly separation process, and simplify a process and reduce costs at the same time by not requiring an additional purification process.

In addition, the present disclosure may further include obtaining the lithium chloride by removing the solvent from the second mixture after the step (2). The method for removing the solvent is not limited as long as it is a method of separating the solvent and the lithium chloride dissolved in the solvent, but preferably, it may be a method for drying the solvent.

In this case, the drying process may be carried out at a temperature of 20 to 200 °C, more preferably, at a temperature of 50 to 150 °C and under vacuum conditions. This may be appropriately selected in consideration of the type and properties of the solvent included in the second mixture.

In addition, the present disclosure provides a method for recycling a polyanion-based lithium secondary battery cathode material in such a way as to separate it into lithium carbonate. FIG. 2 is a flowchart schematically illustrating a method for recycling a polyanion-based lithium secondary battery cathode material in such a way as to separate it into lithium carbonate according to an embodiment of the present disclosure, and hereinafter, with reference to the flowchart, the present disclosure will be specifically described. In this case, overlapping parts of the above-described polyanion-based lithium secondary battery cathode material are omitted to be described.

First, after performing the steps (1) and (2) of the above-described method for recycling a polyanion lithium secondary battery cathode material, as a step (3), the second mixture is reacted with a carbonate to form a third mixture containing lithium carbonate (Li₂CO₃) (S300 in FIG. 2).

Specifically, in the step (3), the third mixture may react with a carbonate to form lithium carbonate (Li₂CO₃) containing lithium as a product and a salt containing chlorine. In this case, the carbonate is not limited as long as it may react with the lithium chloride of the second mixture to form lithium carbonate and a salt including chlorine, but preferably it may be either sodium carbonate (Na₂CO₃) or potassium carbonate (K₂CO₃), and more preferably it may be sodium carbonate.

For example, when the carbonate is sodium carbonate, the salt containing chlorine may be sodium chloride (NaCl).

The amount of such carbonate may be appropriately selected in consideration of the amount of the second mixture formed in the step (2), and preferably, it may be mixed 0.5 to 5 times as compared to the expected number of moles of lithium in the second mixture formed in the step (2). In this case, if the carbonate is included less than 0.5 times as compared to the expected number of moles of lithium in the second mixture, a sufficient amount of lithium carbonate may not be formed, so that the separation efficiency is lowered, and if the carbonate is included more than 5 times as compared to the expected number of moles of lithium, the amount of carbonate may be excessive, so that a later washing and additional purification process may be required.

In a step (4) below, is separated from the third mixture (S400 in FIG. 2).

The method for separating the lithium carbonate is not limited as long as it is a method capable of separating lithium carbonate and a salt containing chlorine, but preferably, it may be a solid-liquid separation method that utilizes the difference in solubility between lithium carbonate and the salt containing chlorine.

Specifically, lithium carbonate has low solubility in the solvent contained in the third mixture, and salt containing chlorine has high solubility in the solvent contained in the third mixture, so the lithium carbonate may be separated by performing solid-liquid separation utilizing this difference in solubility.

In this case, the solvent included in the third mixture is completely dried, and a second solvent is additionally added to separate lithium carbonate and salt containing chlorine, and the lithium carbonate and the salt containing chlorine may be separated by utilizing the difference in solubility with respect to the second solvent. The second solvent is not limited as long as it is capable of dissolving a salt containing chlorine without dissolving lithium carbonate in order to separate the lithium carbonate and the salt containing chlorine, but preferably water, alcohol, ammonia, and the like, and most preferably water or methanol. In this case, it may be advantageous in that the difference in solubility between lithium carbonate and salt containing chlorine is large, so that it is possible to separate lithium carbonate of high purity.

In addition, the amount of the second solvent used may be appropriately selected in consideration of the amount of lithium carbonate and salt containing chlorine included in the third mixture, and more preferably, the second solvent may be additionally added in an amount of 1,000 to 100,000 parts by weight based on 100 parts by weight of the entire third mixture.

In this case, the process using the drying may be carried out at a temperature of 20 to 200 °C, and more preferably at a temperature of 50 to 150 °C and under vacuum conditions. This may be appropriately selected in consideration of the type and properties of the solvent included in the third mixture.

In addition, according to a preferred embodiment of the present disclosure, additional drying can be performed to remove a small amount of solvent included in the separated lithium carbonate.

In addition, the lithium carbonate obtained through the above-described process may be used as a lithium compound to be added into a fifth mixture in a resynthesis process to be described later.

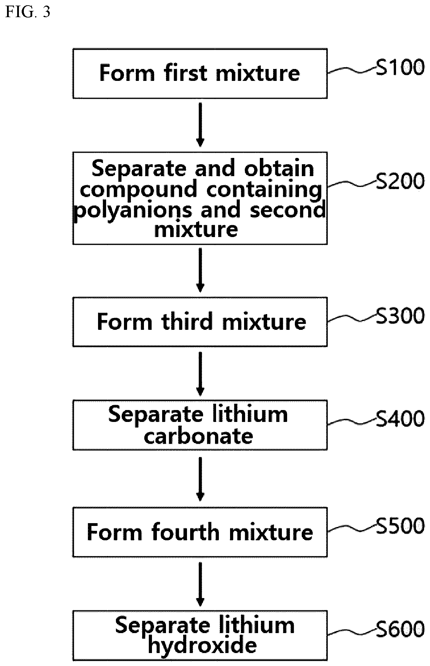

In addition, the present disclosure provides a method for recycling the polyanion-based lithium cathode material in such a way as to separate it into lithium hydroxide. FIG. 3 is a flowchart schematically illustrating a method for recycling a polyanion-based lithium cathode material in such a way as to separate it into lithium hydroxide according to an embodiment of the present disclosure, and the present disclosure will be described in detail below. In this case, a portion overlapping the above-described method for recycling a polyanion-based lithium cathode material will be omitted.

First, after performing the steps (1) to (4) of the above-described method for recycling a polyanion lithium cathode material, as a step (5), the lithium carbonate is reacted with calcium hydroxide to obtain a fourth mixture including lithium hydroxide (LiOH) and calcium carbonate (CaCO₃) (S500 in FIG. 3).

Specifically, the lithium carbonate may be reacted with calcium hydroxide to form lithium hydroxide and calcium carbonate.

In this case, the calcium hydroxide may be composed of calcium hydroxide alone or may further include a solvent. In this case, the solvent is not limited as long as it is a solvent capable of separating the two compounds by the difference in solubility, in which lithium hydroxide has a high solubility and calcium carbonate has a low solubility in the solvent in a step (6) described below, but it may preferably be water.

Specifically, the calcium hydroxide may include 1,000 to 100,000 parts by weight of the solvent based on 100 parts by weight of the total calcium hydroxide.

In addition, the amount of calcium hydroxide may be appropriately selected in consideration of the amount of lithium carbonate formed in the step (4), and preferably may be mixed in a molar number of 0.5 to 5 times the molar number of the lithium carbonate formed in the step (4). In this case, if calcium hydroxide is included in a molar number less than 0.5 times the molar number of lithium carbonate, a sufficient amount of lithium hydroxide may not be formed, there is a problem in that the separation efficiency may be reduced, and if calcium hydroxide is included in a molar number more than 5 times the molar number of lithium carbonate, the amount of calcium hydroxide may be excessive, requiring subsequent washing and additional purification processes.

Next, in a step (6), lithium hydroxide is separated from the fifth mixture (S600 in FIG. 3).

The method for separating the lithium hydroxide is not limited as long as it is a method capable of separating calcium carbonate from a solution containing lithium hydroxide, but preferably, it may be a solid-liquid separation method in which lithium hydroxide and calcium carbonate are separated using a difference in solubility.

Specifically, since the calcium carbonate has a low solubility in the solvent including the fourth mixture and the lithium hydroxide has a high solubility in the solvent, the solution containing lithium hydroxide may be separated by the solid-liquid separation method using the solubility difference. In this case, the solvent is not limited as long as it is a solvent capable of separating the two compounds by the difference in solubility in which the lithium hydroxide has a high solubility and the calcium carbonate has a low solubility in the solvent, but preferably, it may be water.

In addition, the present disclosure may further include removing the solvent to obtain the lithium hydroxide after the step (6). The method for removing the solvent is not limited as long as it is a method of separating the solvent and the lithium hydroxide dissolved in the solvent, but preferably it may be a method for drying the solvent.

In this case, the drying process may be carried out at a temperature of 20 to 200 °C, more preferably, at a temperature of 50 to 150 °C and under vacuum conditions. This may be appropriately selected in consideration of the type and properties of the solvent included in the fourth mixture.

In addition, the lithium hydroxide obtained through the above-described process may be used as a lithium compound to be added into a fifth mixture in a resynthesis process to be described later.

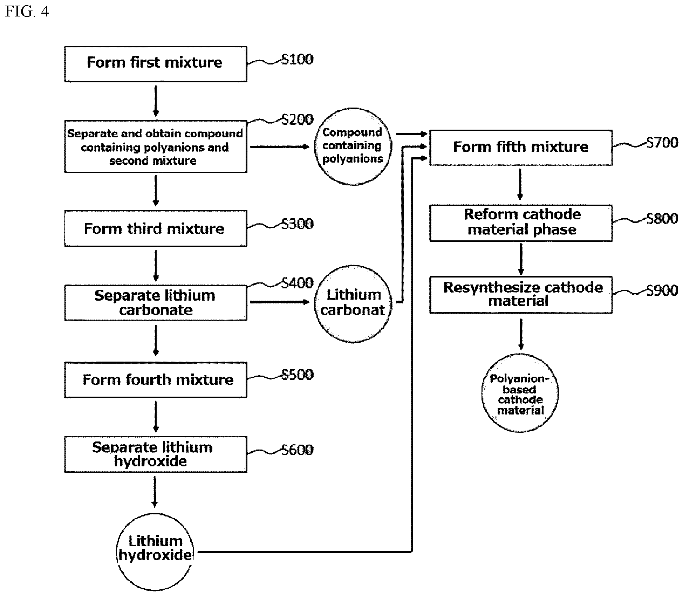

In addition, the present disclosure provides a method for recycling a polyanion-based lithium cathode material in such a way as to resynthesize a new polyanion-based lithium cathode material. FIG. 4 is a flowchart illustrating a method for recycling a polyanion-based lithium cathode material in such a way as to resynthesize a new polyanion-based lithium cathode material according to an embodiment of the present disclosure, and the present disclosure will be described in detail with reference to the following. In this case, a portion overlapping the above-described method for recycling a polyanion-based lithium cathode material will be omitted.

First, after performing the steps (1) and (2) of the above-described method for recycling a polyanion lithium cathode material, as a step (7), a fifth mixture is formed by adding a lithium compound to the compound containing polyanions (S700 in FIG. 4).

The lithium compound is not limited as long as it may be resynthesized into the polyanion-based lithium cathode material by reacting with the compound containing polyanions included in the second mixture by a process described below, but preferably it may include at least one selected from the group consisting of lithium carbonate, lithium hydroxide, lithium nitrate, lithium sulfate, lithium acetate, and lithium oxalate.

In addition, the lithium compound may include lithium carbonate or lithium hydroxide obtained by the method for recycling the polyanion lithium cathode material of the present disclosure.

Specifically, the amount of the lithium compound may be appropriately selected in consideration of the amount of the compound containing polyanions formed in the step (2), and preferably, the lithium compound may be added so that the molar number of lithium ions in the lithium compound is 80 to 200 % relative to the molar number of metal ions in the compound containing polyanions included in the second mixture formed in the step (2), and more preferably, 100 to 120 %. In this case, if the molar number of lithium ions in the lithium compound relative to the molar number of metal ions in the compound containing polyanions is added less than 100 %, a cathode material lacking in lithium may be formed, and if it is added so that it exceeds 120 %, impurities may be formed or an excessive amount of lithium compound may be precipitated.

Next, in a step (8), the fifth mixture is reacted to reform a phase of the polyanion-based lithium secondary battery cathode material (S800 in FIG. 4).

Specifically, the lithium compound reacts with the compound containing polyanions included in the fifth mixture, reforming the phase of the polyanion-based lithium cathode material.

The reforming the phase of the polyanion-based lithium secondary battery cathode material refers to inducing the synthesis of the cathode material by inducing decomposition of the lithium compound at the decomposition temperature of the lithium compound, and more specifically, it may be a process of maintaining a sufficient time for lithium to be uniformly inserted into a structure of the compound containing polyanions at the decomposition temperature of the lithium compound.

The method for reforming the phase of the polyanion-based lithium secondary battery cathode material is not limited as long as the process of forming the polyanion-based lithium cathode material is uniform by reacting the compound containing polyanions and the lithium compound, but may be preferably reacted at a temperature of 200 to 400 °C for 1 to 24 hours.

More specifically, the corresponding reforming process is performed at a lower temperature than the resynthesis process through the improvement of the crystallinity of the cathode material described later, thereby preventing the synthesis of non-uniform cathode materials due to the reduction and decomposition reaction of the cathode material and the generation of impurities thereby. In this case, if the temperature of the reforming process is less than 200 °C, there may be a problem that the efficiency of the cathode material synthesis reaction is too reduced due to insufficient thermal energy, and if the temperature of the reforming process exceeds 400 °C, there may be a problem that the reaction does not occur uniformly.

Next, in a step (9), the crystallinity of the fifth mixture is improved and resynthesized into a polyanion-based lithium secondary battery cathode material with excellent electrochemical activity (S900 in FIG. 4).

Specifically, the method for resynthesizing the polyanion-based lithium secondary battery cathode material with excellent electrochemical activity by improving the crystallinity is not limited as long as it may improve the crystallinity of the reaction product formed in the step (8), but may be a process of reacting it at a temperature of 500 to 850 °C for 1 to 24 hours. At temperatures less than 500 °C, the effect of improving crystallinity may be poor, and at temperatures exceeding 850 °C, impurities may be formed.

More specifically, the polyanion-based lithium cathode material may be resynthesized through the above process.

In addition, the resynthesized polyanion-based lithium cathode material may have an initial discharge capacity of 100 mAh/g or more.

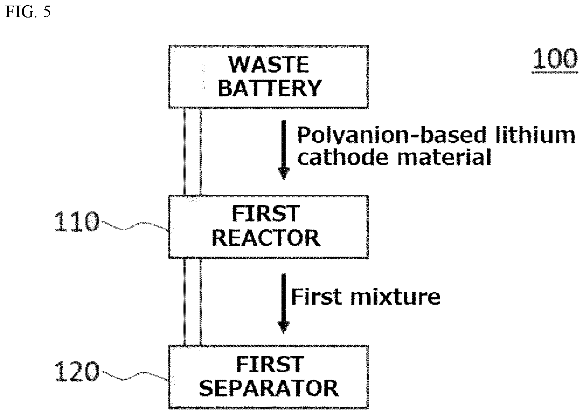

Meanwhile, the present disclosure provides a device for recycling a polyanion-based lithium cathode material that implements the above-described method for recycling the polyanion-based lithium cathode material. FIG. 5 is a diagram illustrating a device for recycling a polyanion-based lithium cathode material according to an embodiment of the present disclosure, and hereinafter, with reference to the diagram, the present disclosure will be specifically described. In this case, overlapping parts of the recycling method of the polyanion-based lithium cathode material described above will be omitted.

The present disclosure provides a device for recycling a polyanion-based lithium secondary battery cathode material, including a first reactor configured to form a first mixture including a compound containing polyanions and lithium chloride by chlorinating a polyanion-based lithium cathode material separated from a battery with a gas containing chlorine, and a first separator configured to communicate with the first reactor to separate and obtain the compound containing polyanions and a second mixture containing lithium chloride and a solvent by contacting the first mixture with the solvent.

The first reactor 110 performs a chlorination reaction to separate the lithium chloride and the compound containing polyanions.

More specifically, the first reactor 110 may obtain the first mixture including the compound containing polyanions and the lithium chloride by chlorinating the polyanion-based lithium cathode material separated from the battery with the gas containing chlorine. That is, the lithium of the polyanion-based lithium cathode material may be obtained by being converted into a form of lithium chloride, and the remaining compound may be separated in a form of the compound containing polyanions.

Accordingly, the first reactor 110 may further include a separate gas injector (not shown) for injecting the gas containing chlorine. In addition, since the chlorination reaction in the first reactor 110 causes the polyanion-based lithium cathode material to react with the gas under high temperature conditions, the first reactor 100 may include a heater (not shown) for maintaining the high temperature state. The shape and material of the injector and the heater may be ordinary as long as they meet the purpose of the present disclosure, and is not particularly limited.

Next, the first separator 120 communicates with the first reactor 110 and forms the compound containing polyanions and a second mixture containing lithium chloride and a solvent by contacting the first mixture with the solvent.

More specifically, the first mixture formed in the first reactor 110 may be transferred to the first separator 120 through a transfer path (not shown), and the transferred first mixture contacts the solvent so that lithium chloride is dissolved in the solvent and converted into a liquid phase, and the compound containing polyanions that has not reacted with chlorine remains in a solid state and may be easily separated by being washed through the solvent.

Accordingly, the first separator 120 may further include a solvent injector (not shown) for injecting a solvent, and the shape and material of the injector are not particularly limited as long as they meet the purpose of the present disclosure.

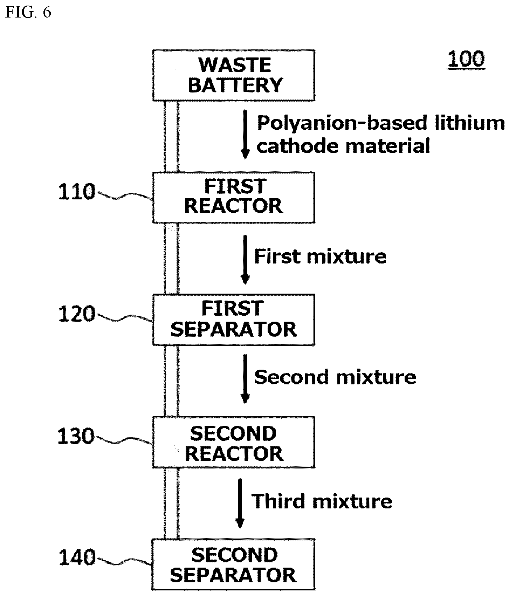

In addition, the device for recycling a polyanion-based lithium secondary battery cathode material according to the present disclosure may further include a second reactor configured to communicate with the first separator and form a third mixture including lithium carbonate by reacting the second mixture with carbonate, and a second separator configured to communicate with the second reactor and separate the lithium carbonate from the third mixture. FIG. 6 is a diagram illustrating a device for recycling a polyanion-based lithium cathode material according to an embodiment of the present disclosure, and hereinafter, with reference to the diagram, the present disclosure will be specifically described. In this case, a portion overlapping the above-described method and device for recycling a polyanion-based lithium secondary battery cathode material will be omitted.

First, the second reactor 130 communicates with the first separator 120 and may form a third mixture including lithium carbonate by reacting the second mixture with carbonate.

More specifically, in the first separator 120, a second mixture containing lithium chloride dissolved in a solvent and present in a liquid phase may be transferred to the second reactor 130 through a transfer path (not shown), and the transferred second mixture may be obtained as a third mixture including lithium carbonate and a salt containing chlorine as a product by reacting with a carbonate.

Accordingly, the second reactor 130 may have the carbonate in advance for reacting with the second mixture moved from the first separator 120, and is not limited thereto, and the carbonate may be injected through an additional injector (not shown).

Next, the second separator 140 communicates with the second reactor 130 and separates the third mixture to obtain lithium carbonate.

More specifically, the third mixture including the lithium carbonate and the salt containing chlorine formed by reacting with the carbonate in the second reactor 130 may be transferred to the second separator 140 through a transfer path (not shown), and the salt containing chlorine of the transferred third mixture is dissolved in a solvent and present in a liquid phase, and the lithium carbonate remains in a solid state due to a low solubility in the solvent, so the lithium carbonate may be easily separated and obtained as the lithium carbonate is washed through the solvent.

More specifically, in the second separator 140, lithium may be selectively recovered by separating the lithium carbonate and salt containing chlorine included in the third mixture, and in particular, by drying the third mixture including the solvent to remove some or all of the solvent contained therein, the lithium carbonate and salt containing chlorine present in the third mixture in a solution state may be separated by the difference in solubility in the solvent.

Accordingly, the second separator 140 may further include a solvent injector (not shown) for injecting a solvent, and the shape and material of the injector are not particularly limited as long as they meet the purpose of the present disclosure.

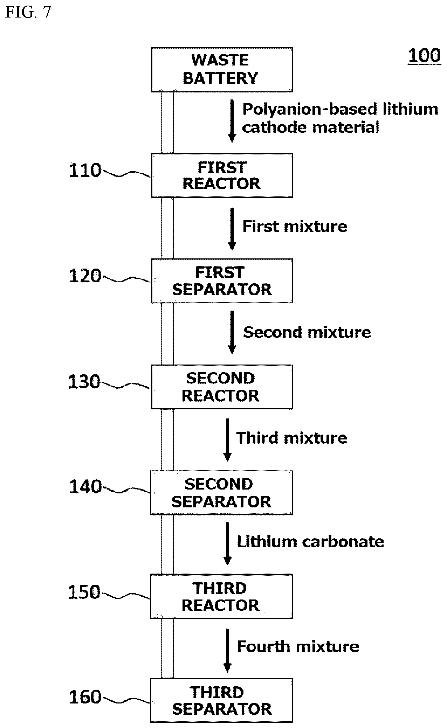

In addition, the device for recycling a polyanion-based lithium secondary battery cathode material according to the present disclosure may further include a third reactor configured to communicate with the second separator and form a fourth mixture including lithium hydroxide and calcium carbonate by reacting the lithium carbonate with calcium hydroxide, and a third separator 160 configured to communicate with the third reactor 150 and separate the lithium carbonate from the fourth mixture. FIG. 7 is a diagram illustrating a device for recycling a polyanion-based lithium cathode material according to an embodiment of the present disclosure, and hereinafter, with reference to the diagram, the present disclosure will be specifically described. In this case, a portion overlapping the above-described method and device for recycling a polyanion-based lithium secondary battery cathode material will be omitted.

First, the third reactor 150 communicates with the second separator 140 and reacts lithium carbonate with calcium hydroxide to form a fourth mixture including lithium hydroxide and calcium carbonate.

More specifically, the lithium carbonate separated in the second separator 140 may be transferred to the third reactor 150 through a transfer path (not shown), and the transferred lithium carbonate may be reacted with calcium hydroxide to obtain a fourth mixture including lithium hydroxide and calcium carbonate as a product.

Accordingly, the third reactor 150 may have calcium hydroxide in advance for reacting with lithium carbonate moved from the second separator 140, and is not limited thereto, and calcium hydroxide may be injected through an additional injector (not shown).

In this case, the calcium hydroxide may be composed of calcium hydroxide alone or may further include a solvent. In this case, the solvent is not limited as long as it is a solvent capable of separating the two compounds by the difference in solubility, in which lithium hydroxide has a high solubility and calcium carbonate has a low solubility in the solvent, but it may preferably be water.

Accordingly, the third separator 150 may further include a solvent injector (not shown) for injecting a solvent, and the shape and material of the injector are not particularly limited as long as they meet the purpose of the present disclosure.

Next, the third separator 160 communicates with the third reactor 150 and may separate the lithium hydroxide from the fourth mixture.

More specifically, the fourth mixture including lithium hydroxide and calcium carbonate formed by reacting with calcium hydroxide in the third reactor 150 may be transferred to the third separator 160 through a transfer path (not shown), and the lithium hydroxide of the transferred fourth mixture is dissolved in a solvent and present in a liquid phase, and the calcium carbonate remains in a solid state due to a low solubility in the solvent, and may be easily separated by being washed through the solvent.

Accordingly, the third separator 160 may also further include a solvent injector (not shown) for injecting a solvent, and the shape and material of the injector are not particularly limited as long as they meet the purpose of the present disclosure.

In addition, the device for recycling a polyanion-based lithium secondary battery cathode material according to the present disclosure may further include a synthesizer 170 configured to communicate with the first separator 120, the second separator 140, and the third separator 160, and resynthesizes a polyanion-based lithium secondary battery cathode material from a compound containing polyanions, lithium carbonate, and lithium hydroxide separated by the first separator 120, the second separator 140, and the third separator 160.

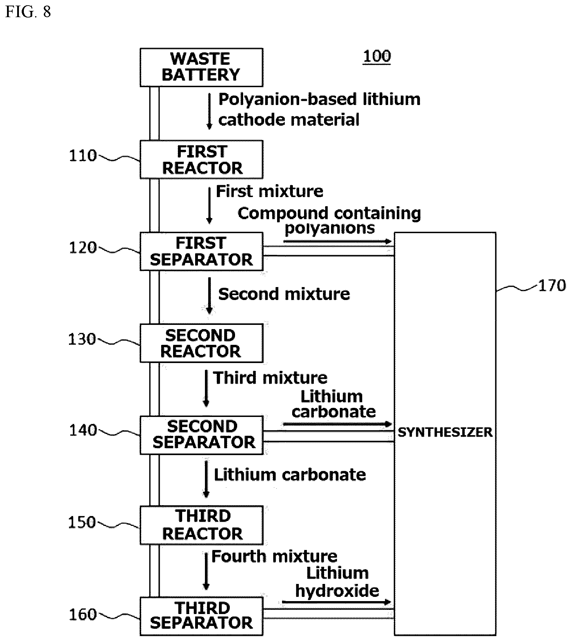

FIG. 8 is a diagram illustrating a device for recycling a polyanion-based lithium cathode material according to an embodiment of the present disclosure, and hereinafter, with reference to the diagram, the present disclosure will be specifically described. In this case, a portion overlapping the above-described method and device for recycling a polyanion-based lithium secondary battery cathode material will be omitted.

More specifically, the compound containing polyanions separated from the first separator 120 may be transferred to the synthesizer 170 through a transfer path (not shown), and the transferred compound containing polyanions may be resynthesized into the polyanion-based lithium secondary battery cathode material by reacting with the lithium compound.

In this case, the lithium compound is not limited as long as it reacts with the compound containing polyanions and may be resynthesized into the polyanion-based lithium secondary battery anode material, but preferably may be any one or more selected from the group consisting of lithium carbonate and lithium hydroxide. In addition, the synthesizer 170 may have the lithium compound for reacting with the transferred compound containing polyanions in advance, and the lithium compound may be injected through an additional injector (not shown) without being limited thereto.

In addition, the lithium compound may be lithium carbonate separated by the second separator 140 or lithium hydroxide separated by the third separator 160 or a mixture of the two compounds. In this case, the lithium carbonate separated from the second separator 140 may be transferred to the synthesizer 170 through a transfer path (not shown), and the lithium hydroxide separated from the third separator 160 may also be transferred to the synthesizer 170 through a transfer path (not shown).

In addition, since the reaction may occur in the high-temperature state in the synthesizer 170, the synthesizer 170 may further include a heater (not shown) for maintaining the high-temperature state. The shape and material of the heater may be ordinary as long as they meet the purpose of the present disclosure, and is not particularly limited.

The present disclosure will be described in more detail with reference to the following examples, but the following examples are not intended to limit the scope of the present disclosure, which should be interpreted as providing an easy understanding of the present disclosure.

### <Example 1 - LFP powder unit recycling experiment>

### (1) Detection of reaction rate (%) of lithium and impurities according to reaction time and temperature

A lithium separation experiment was conducted using LFP powder, which is a polyanion-based lithium secondary battery cathode material. A commercial LFP powder (1 g) was prepared as the polyanion-based lithium secondary battery cathode material. Next, the prepared sample was subjected to a halogenation reaction under the conditions of Cl2 (10 to 30 sccm) and Ar (170 to 190 sccm) (carrier gas) at different temperatures and times as shown in Table 1 below. After the reaction, the mass of the total product including lithium chloride and a compound containing polyanions (FP, FePO₄) and the reaction rate of lithium are shown in Table 1. The reaction rate of lithium was calculated by dividing the molar number of chlorine reacted by the molar number of lithium present in the reactant under the assumption that chlorine reacted by an increase in mass. In addition, after dissolving the entire product in 250 ml of water (H₂O), components of a solid-state product not dissolved were analyzed using X-ray diffraction (XRD), and also are shown in Table 1.

**[Table 1]**

| Reaction temperature (°C) | Reaction time (h) | Cl₂ flow rate (sccm) | Ar flow rate (sccm) | Products of mass (g) | Reaction rate of lithium (%) | Component analysis of solid-state product |
|---|---|---|---|---|---|---|
| 25 (room temperature) | 0.5 | 30 | 170 | 1.130 | 57.8 | LFP(LiFePO₄) + FP(FePO₄) |
| 50 | 0.5 | 30 | 170 | 1.161 | 71.6 | LFP + FP |
| 50 | 4 | 10 | 190 | 1.173 | 76.9 | LFP + FP |
| 100 | 4 | 10 | 190 | 1.198 | 88.0 | FP |
| 150 | 4 | 10 | 190 | 1.196 | 87.1 | FP |
| 200 | 4 | 10 | 190 | 1. 216 | 96.0 | FP |
| 250 | 4 | 10 | 190 | 1. 212 | 94.2 | FP |
| 300 | 4 | 10 | 190 | 1.040 | - | Li₃Fe₂(PO₄)₃ + unknown |
| 400 | 4 | 10 | 190 | 1.020 | - | LiFeP₂O₇ + Li₃Fe₂(PO₄)₃ |
| 500 | 4 | 10 | 190 | 0.841 | - | LiFeP₂O₇ + Li₃Fe₂(PO₄)₃ |
| 200 | 2 | 10 | 190 | 1.209 | 92.9 | FP |
| 200 | 1 | 10 | 190 | 1.209 | 92.9 | FP |
| 200 | 0.5 | 10 | 190 | 1.203 | 90.2 | FP |
| 200 | 0.167 | 10 | 190 | 1. 116 | 51.6 | FP |

As a result, as shown in Table 1, it was confirmed that the FP phase exists in the temperature range from room temperature to 250 °C. This shows that the chlorination reaction of LFP proceeds even at room temperature and LiCl is formed. However, it was confirmed that the reaction rate of lithium decreases while the LFP phase remains in the low temperature range below 80 °C. In other words, when the reaction proceeds at a temperature between 80 °C and 280 °C, it is excellent in that the LFP reacts completely, no impurities are generated, and the reaction efficiency is high.

However, even if the LFP phase remains, there is no major problem in recovering LiCl through the subsequent dissolution process. This low-temperature process has the advantage of lowering energy consumption and extending the life of the reactor and auxiliary facilities, so that the low-temperature process may be applied at the expense of some efficiency loss when necessary. Therefore, LFP may be separated even when the chlorination reaction is carried out at a temperature range of 20 °C to 280 °C, and it is also excellent in that it is economical as it reduces energy consumption of the process and extends the life of auxiliary facilities.

In addition, in the case of the reaction for 4 hours, when the reaction is performed at a temperature exceeding 280 °C, impurities such as LiFeP₂O₇, Li₃Fe₂(PO4)₃, and unknown compounds are generated due to the side reaction, and thus it may be seen that the impurities exist without being dissolved in the solvent. In addition, the corresponding impurities include both lithium and polyanion-based compounds. Through this, it may be confirmed that when the reaction temperature exceeds 280 °C, the lithium and polyanion-based compounds contained in the polyanion-based lithium secondary battery cathode material were not properly separated.

In addition, in the cases where the reaction for 4 hours, it may be confirmed that when the reaction temperature is 170 to 280 °C, the lithium reaction rate is much better than when the reaction temperature is outside the corresponding temperature range. In addition, when the reaction is performed at a reaction temperature of 200 °C with different reaction times, it may be confirmed that the reaction rate of lithium is lowered when the reaction for less than 0.3 hours. Therefore, when the reaction time is 0.3 hours or more, the recycling efficiency of the polyanion-based lithium secondary battery cathode material is excellent.

### (2) XRD analysis before and after solid-liquid separation

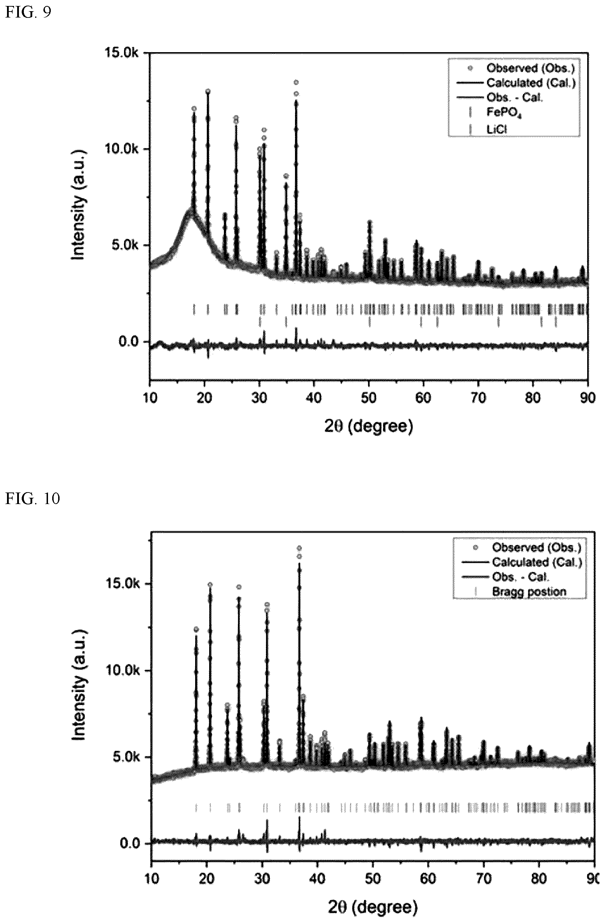

In the case of the reaction at a temperature of 200 °C for 4 hours in Table 1 above, an X-ray diffraction experiment was conducted on the entire product, and the results are shown in FIG. 9. In addition, after dissolving the entire product in 250 ml of water, an X-ray diffraction experiment was conducted on the undissolved solid product, and the results are shown in FIG. 10.

As a result, as shown in FIG. 9, LiCl and FePO₄ were produced through chlorination reaction. In addition, as shown in FIG. 10, all of the generated LiCl was dissolved in water, and only FePO₄ existed in the solid product remaining after dissolution. Through this, it may be confirmed that lithium and a polyanion-based compound may be separated in the form of lithium chloride and the polyanion-based compound through the chlorination reaction of the polyanion-based lithium secondary battery cathode material, and also, it may be confirmed that the lithium chloride and the polyanion-based compound generated may be separated simply using solid-liquid separation through a solvent after the chlorination reaction.

### (3) Analysis of lithium content in recovered solid-state FP

In the case of reacting at temperatures of 50 °C, 100 °C, 150 °C, 200 °C, and 250 °C for 4 hours in Table 1 above, the Li/Fe molar ratio was measured using an inductively coupled plasma analysis method for the undissolved solid product after the entire product was dissolved in water, and the results are shown in Table 2.

**[Table 2]**

| Reaction temperature (°C) | Reaction time (h) | Lithium/iron molar ratio |
|---|---|---|
| Initial sample | - | 1.077 |
| 50 | 4 | 0.222 |
| 100 | 4 | 0.091 |
| 150 | 4 | 0.030 |
| 200 | 4 | 0.035 |
| 250 | 4 | 0.053 |

As a result, as shown in Table 2, it may be seen that the separation of the lithium and polyanion-based compounds was successfully performed in comparison to the initial sample, as a result of significantly reduced lithium content in the recovered solid-state product.

### (4) Analysis of the contents of lithium, iron, and phosphoric acid in the recovered lithium chloride aqueous solution

In the case of reacting at temperatures of 50 °C, 100 °C, 150 °C, 200 °C, and 250 °C for 4 hours in Table 1 above, after dissolving the entire product in water, the amount of lithium, iron, and phosphorus in the solution excluding the undissolved solid-state product and the purity of lithium according to this were measured, and the results are shown in Table 3. The purity of lithium is calculated as a percentage of the content of lithium relative to the sum of the following lithium, iron, and phosphorus contents.

**[Table 3]**

| Reaction temperature (°C) | Reaction time (h) | Li(ppm) | Fe (ppm) | P(ppm) | Li purity (%) |
|---|---|---|---|---|---|
| 50 | 4 | 129.00 | 0.06 | 3.19 | 97.54 |
| 100 | 4 | 144.48 | 0.01 | 3.25 | 97.79 |
| 150 | 4 | 144.25 | 0.02 | 2.08 | 98.57 |
| 200 | 4 | 149.12 | 0.13 | 0.22 | 99.77 |
| 250 | 4 | 143.84 | 4.06 | 0.1 | 97.19 |

As a result, as shown in Table 3, it may be seen that lithium is present in a very high purity in the dissolved solution after the chlorination reaction. Through this, it may be seen that lithium can be extracted with high purity simply by contacting the product after the chlorination reaction with the solution.

### <Example 2 - LFP electrode unit recycling experiment>

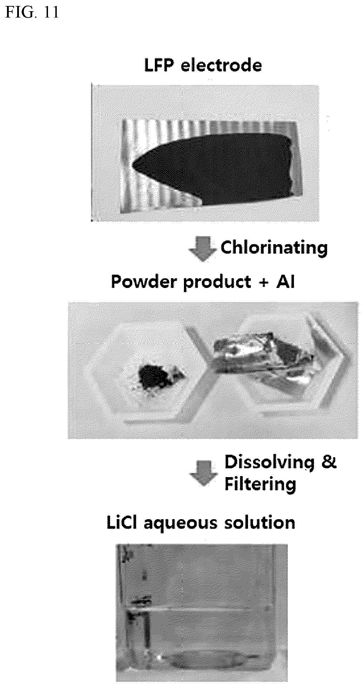

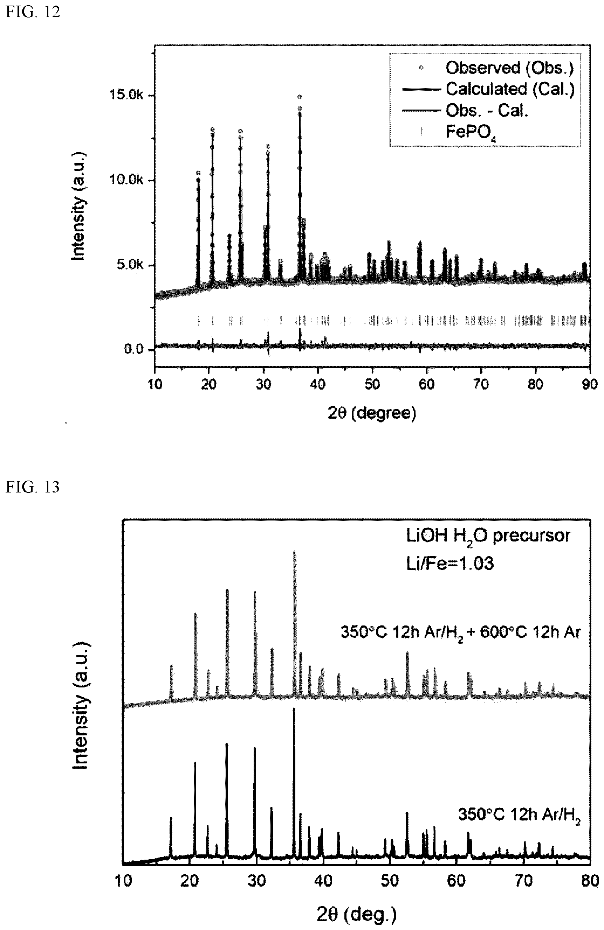

An electrode including a commercial LFP, a carbon conductor, a polymer binder, and an Al conductive material was prepared. The electrode was obtained by coating a slurry in which 90 wt% of LFP, 5 wt% of Super-P carbon black, and 5 wt% of PVDF binder were homogeneously mixed in an NMP organic solvent on the Al conductive material to a uniform thickness and then volatilizing the NMP through a drying process. Next, the prepared sample was subjected to a chlorination reaction at 200 °C for 1 hour under the conditions of Cl₂ (10 seem) and Ar (190 seem) (carrier gas). After the chlorination reaction, the powder separated from the Al conductive material was dissolved in 250 ml of water. In this case, photographs of the reaction process are shown in FIG. 11, and X-ray diffraction analysis was performed on the insoluble material that was not dissolved after the powder was dissolved in water, and the results are shown in FIG. 12.

First, as shown in FIG. 11, even in the case of the polyanion-based lithium secondary battery cathode material present in the form of an electrode, it may be confirmed that the lithium and polyanion-based compound may be easily separated from the electrode assembly in a powder form through a chlorination reaction. In addition, as shown in FIG. 12, lithium is not present in the insoluble material remaining after dissolving in water, and the lithium and polyanion-based compound may be simply separated by solid-liquid separation.

### <Example 3 - Resynthesis experiment of LFP cathode material>

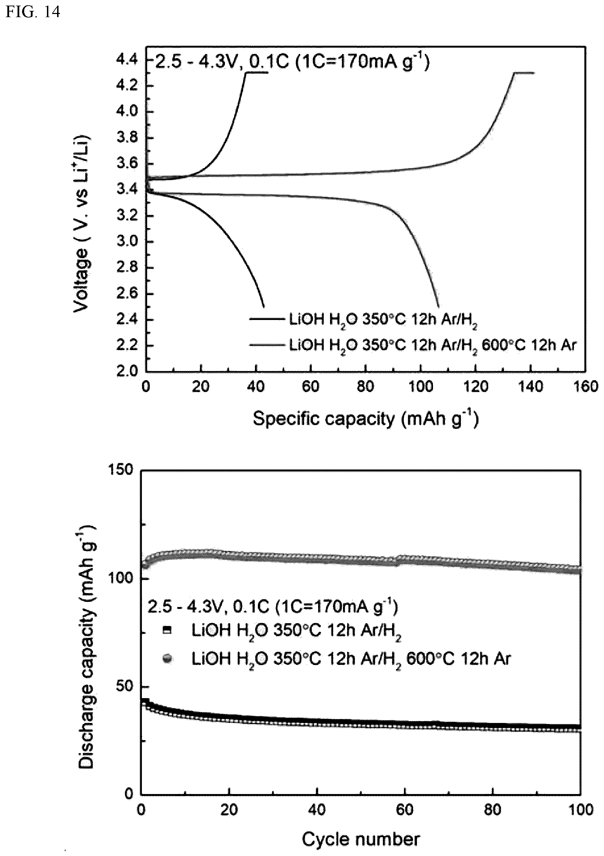

For the resynthesis of the LFP cathode material, FePO₄, a residual compound of the LFP cathode material chlorinated at 200 °C for 10 minutes under the same conditions as in Example 1 of the present disclosure, was prepared. Next, 0.5 g of the recycled FePO₄ was mixed with LiOH·H2O. In this case, the molar ratio of Li to the mole number of Fe was 1.03. Next, the mixed sample was reacted at 350 °C for 12 hours under the conditions of 96.5 vol% of argon (Ar) and 3.5 vol% of hydrogen (H2). Next, the obtained product was reacted under the conditions of Ar at 600 °C for 12 hours. Thereafter, X-ray diffraction analysis and electrochemical performance evaluation were performed on the obtained product, which are shown in FIGS. 13 and 14, respectively. As shown in FIG. 13, even when only the heat treatment at 350 °C was performed, the LFP phase was formed, but defects were present inside the material, and the electrochemical activity was lowered, as shown in FIG. 14. Meanwhile, as shown in FIG. 13, defects in the material were removed through subsequent heat treatment at 600 °C, and as shown in FIG. 14, the electrochemical activity increased.

In this case, as shown in FIG. 14, when the step of reforming the cathode material phase and the step of improving the crystallinity were sequentially performed, it was confirmed that the cathode material having excellent initial discharge capacity of 100 mAh/g or more at a current density of 170 mA/g was resynthesized.

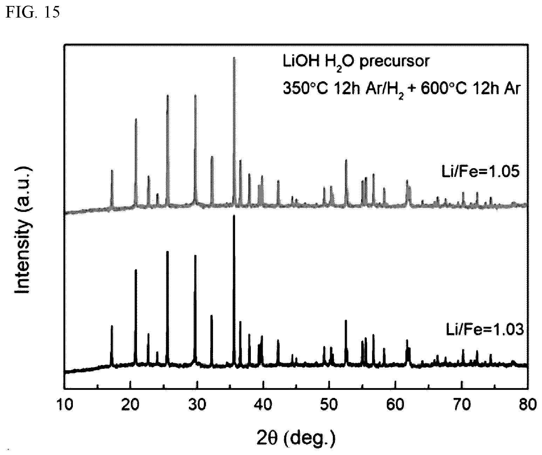

As shown in FIG. 15, it was confirmed that the LFP phase was effectively formed even if the mole number of Li to Fe 1.05 were changed.

## Claims

1. A method for recycling a polyanion-based lithium secondary battery cathode material, comprising:
(1) forming a first mixture including a compound containing polyanions and lithium chloride (LiCl) by chlorinating a polyanion-based lithium secondary battery cathode material separated from a battery with a gas containing chlorine; and
(2) separating and obtaining the compound containing polyanions and a second mixture including the lithium chloride and a solvent by contacting the first mixture with the solvent.

2. The method of claim 1, after the step (2), further comprising:
obtaining the lithium chloride by removing the solvent from the second mixture.

3. The method of claim 1, wherein the polyanion-based lithium secondary battery cathode material in the step (1) is LiAₓ(PO₄)_{y},
wherein "A" is at least one selected from the group consisting of iron (Fe), cobalt (Co), manganese (Mn), and nickel (Ni), and "x" and "y" satisfy 0.5<x≤3 and 0.5<y≤3.

4. The method of claim 1, wherein a temperature of the chlorination reaction is 20 to 280 °C.

5. The method of claim 1, wherein a temperature of the chlorination reaction is 170 to 280 °C.

6. The method of claim 1, wherein the gas including chlorine includes at least one selected from the group consisting of chlorine gas (Cl₂), hydrogen chloride (HCl), phosgene (COCl₂), and carbon tetrachloride (CC1₄).

7. The method of claim 1, wherein the solvent includes at least one selected from the group consisting of water, ethanol, methanol, butanol, propanol, hydrazine, methylformaldehyde, acetone, formic acid, pyridine, and benzene.

8. A method for recycling a polyanion-based lithium secondary battery cathode material, comprising:
(1) forming a first mixture including a compound containing polyanions and lithium chloride (LiCl) by chlorinating a polyanion-based lithium secondary battery cathode material separated from a battery with a gas containing chlorine; and
(2) separating and obtaining the compound containing polyanions and a second mixture including the lithium chloride and a solvent by contacting the first mixture with the solvent;
(3) forming a third mixture including lithium carbonate (Li₂CO₃) by reacting the second mixture with a carbonate; and
(4) separating the lithium carbonate from the third mixture.

9. A method for recycling a polyanion-based lithium secondary battery cathode material, comprising:
(1) forming a first mixture including a compound containing polyanions and lithium chloride (LiCl) by chlorinating a polyanion-based lithium secondary battery cathode material separated from a battery with a gas containing chlorine; and
(2) separating and obtaining the compound containing polyanions and a second mixture including the lithium chloride and a solvent by contacting the first mixture with the solvent;
(3) forming a third mixture including lithium carbonate (Li₂CO₃) by reacting the second mixture with a carbonate;
(4) separating the lithium carbonate from the third mixture;
(5) obtaining a fourth mixture including lithium hydroxide (LiOH) and calcium carbonate (CaCO₃) by reacting the lithium carbonate with calcium hydroxide; and
(6) separating the lithium hydroxide from the fourth mixture.

10. The method of claim 9, after the step (2) further comprising:
(7) forming a fifth mixture by adding a lithium compound to the compound containing polyanions;
(8) reforming a phase of the polyanion-based lithium secondary battery cathode material by reacting the fifth mixture; and
(9) resynthesizing the fifth mixture into the polyanion-based lithium secondary battery cathode material with excellent electrochemical activity by improving a crystallinity of the fifth mixture.

11. The method of claim 10, wherein the lithium compound is lithium carbonate (Li₂CO₃) separated from the third mixture in the step (4) or lithium hydroxide (LiOH) separated from the fourth mixture in the step (6).

12. The method of claim 10, wherein the molar number of lithium ions in the lithium compound is 100 to 120 % of the molar number of metal ions in the compound containing polyanions.

13. The method of claim 10, wherein the step (8) includes reacting the fifth mixture at a temperature of 200 to 400 °C for 1 to 24 hours.

14. The method of claim 10, wherein the step (9) includes reacting the fifth mixture at a temperature of 500 to 850 °C for 1 to 24 hours.

15. The method of claim 10, wherein the resynthesized polyanion-based lithium secondary battery cathode material has an initial discharge capacity of 100 mAh/g or more.
